# EUROPEAN PATENT APPLICATION

(11) **EP 1 619 859 A1**
(43) Date of publication of application: **25.01.2006**
(21) Application number: 04017097.9
(22) Date of filing: 20.07.2004
(51) Int. Cl.: H04M 1/02, H04N 7/14

(54) **A portable electronic device and a movable part**

(71) Applicant: SIEMENS AKTIENGESELLSCHAFT, 80333 München (DE)
(72) Inventor: Hoyer, Michael, 9200 Aalborg SV (DK)

(57) **Abstract**

A portable electronic device (10; 20; 30) comprisesa body part (19) comprising a camera (11) further comprising an optical lens (12); and a movable part (18) adapted:
i) in a first position, to provide a cover for the optical lens (12) or a filter in front of the optical lens (12); and
ii) in a second position, to provide a support for the body part (19).

A movable part (18) for a portable electronic device (10; 20; 30) comprising a camera (11), being suitable for being placed in two position: i) in a first position, to provide a cover for a optical lens (12) of the camera (11) or a filter in front of the optical lens (12); and ii) in a second position, to provide a support for a body part (19) of the portable electronic device (10; 20; 30).

## Description

### Field of the invention

The invention relates to portable electronic devices comprising a body part further comprising a camera.

### Background of the invention

Digital cameras have become commonplace on today's market. Because of their relatively simple manufacture and low cost, many portable electronic devices, especially mobile telephones and Portable Digital Assistants PDA, include a digital camera. For brevity, in the following, to a digital camera is referred as camera. A camera may be suitable for taking photographs (sometimes referred to still images) or recording a moving picture.

The subjective quality of an image taken with a camera comprised in a portable electronic device, now excluding devices for which the main or sole purpose is to be used as a camera, is usually not particularly good. This is partly due to the fact that in order to achieve good image quality, the optical lens of the camera should be of high quality. A portable device which should be suitable to be carried along all time and in almost any occasion may nevertheless be subject to mechanical shocks, dirt, scratching, or wear and tear. This has partly led the manufacturers to use rather low-quality optical lenses in their portable electronic devices. Even though means for converting an image captured by an optical lens to a digital image have improved drastically, which can e.g. be noted in the resolution of photocells and color balance of the resulting image, the experienced image quality is still low.

Furthermore, a camera of a portable electronic device may be impractical to use because of e.g. the shape of the portable electronic device. For example, a PDA or a mobile telephone is usually very thin in order to facilitate portability. This has some negative consequences in relation to using the camera, since if the camera is to be used with self timer or in poor lighting conditions or in a mode requiring a longer shutter time.

### Summary of the invention

An objective of the invention is to improve the suitability of a portable electronic device to accommodate an optical lens of relatively good quality, and to support using the camera in the portable electronic device with a self timer, in poor lighting conditions or in a mode requiring longer shutter time. This objective can be achieved as set out in claim 1 or 11.

A further objective of the invention is to enable the portable electronic device to accommodate an optical lens having better optical quality or being relatively long. This objective can be achieved as set out in claim 2.

A still further objective of the invention is to improve the suitability of a portable electronic device for photography when the user is not helding it in hand. This objective can be achieved as set out in claim 3 or 12.

A still further objective of the invention is to improve the quality of pictures taken in bad lighting conditions. This objective can be achieved as set out in claim 6 or 7, or 13.

Other claims describe further advantageous embodiments of the invention.

### Advantages of the invention

If a portable electronic device comprises a body part comprising a camera further comprising an optical lens, and a movable part adapted: i) in a first position, to provide a cover for the optical lens or a filter in front of the optical lens; and ii) in a second position, to provide support for the body part, on one hand, an easy way to protect the optical lens or a filter in front of the optical lens can be offered to the user. On the other hand, when the camera is to be used with a self timer, in bad lighting conditions, or in a mode requiring a longer shutter time, by providing support for the portable electronic device the probability of the resulting images being blurred or fuzzy can be reduced.

Especially advantageous this may be in a case where the dimensions of a portable electronic device are smaller in at least one direction than in another. Then it may bring an advantage to the user to use the camera of the portable electronic device so that a taller side of the portable electronic device lifts the camera up, e.g. in order to reduce the amount of a supporting surface in the resulting picture. In order not to compromise the quality it may then be advantageous that the portable electronic device will be supported from its slimmer side, especially by increasing the size contact area between a contact surface and the portable electronic device.

If the body part has an elongated form having at least one end, the optical axis of the optical lens passing through the said end, and the movable part in its first position is adapted to at least partially cover the said end, there will be more space available for the optical lens and image detecting means of the camera. In this manner, it may be possible to accommodate a zoom object having a larger length than an object having a fixed focal length.

If the support provided by the movable part in its the second position raises a front side of the optical lens to a higher position, the proportion in which a supporting surface will be visible in the resulting picture can be reduced.

If a portable electronic device further comprises a flash in the movable part, the distance between the optical lens and the flash can be changed, especially increased, by changing the position of the movable part. This may improve the quality of an image when the flash is used since the effect sometimes known as "red-eyes" can be reduced. The effect is highly dependent on the distance between the flash and the optical lens, i.e. the more flash light is reflected from the eyes, the more red the eyes of photographed people tend to get.

If a portable electronic device further comprises a flash in the body part, and if the movable part is adapted to, in its first position, to cover the flash, the movable part can be used to protect the flash too. This may improve picture quality in the long run since the probability of the flash being scratched or getting dirty can be reduced. This may reduce the amount of light that will reach the target.

If the movable part is removable from the body part, the user may replace the movable part with some other functional part. In this manner, the feeling of "true portability" of the portable electronic device will not be impaired because its size can be minimized by removing the movable part. Another aspect is that if the removable part comprises a flash, instead of bringing the whole system in for repairing, it suffices that the movable part is replaced with a functioning one.

If the movable part is of acrylic plastic, it can be manufactured rather easily, and furthermore it can have an aesthetically appearing outlook. If the movable part is of coloured silicone, and preferably tightly fitting one the body part, then it has a good grip on the body part which facilitates the protecting function for the optical lens or a filter in front of the optical lens due to providing better sealing against dust and moisture.

If the camera or the optical lens is responsive to the position of the movable part, it can be ensured that tilting in horizontal or vertical direction has no or only a minor adverse effect to the resulting image.

### List of Figures

In the following, the invention is described in more detail by way of examples shown in Figures in the appended drawings, of which:
Figure 1 shows a first portable electronic device;
Figure 2 shows a second portable electronic device;
Figure 3 shows a third portable electronic device;
Figure 4 illustrates the portable electronic device placed on a table for taking an image with self timer;
Figures 5A-C illustrate rotation of the optical axis of the optical lens, and a corresponding compensating mechanism; and
Figures 6A and 6B illustrate displacing the optical axis of the optical lens by pitching the camera.

Same reference numerals refer to similar structural elements throughout the Figures.

### Detailed description

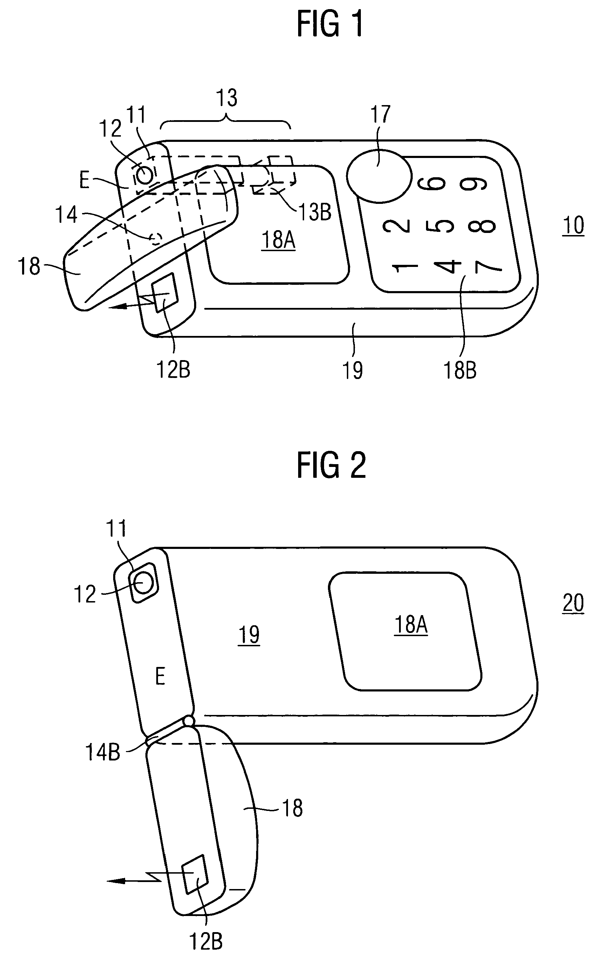

Figure 1 shows a portable electronic device 10. The portable electronic device 10 comprises a body part 19 and a movable part 18. The movable part 18 may be connected to the body part 19 through pivoting means 14.

The portable electronic device comprises a camera 11 which further comprises an optical lens 12 and image detection means 13B. It is possible that the optical lens 12 is a zoom lens. For this purpose the optical lens 12 may also comprise zoom mechanismus 13. The optical lens 12 does not need to be the outermost object pointing out from the body part 19 of the portable electronic device 19 but it may further be covered with a filter or more filters. A particular example of a suitable filter is an Ultra-Violet filter that filters out the shortest wavelengths of light that are usually very intensively present e.g. on sea or on mountains, and which, without filtering, would have an adverse effect on the image quality.

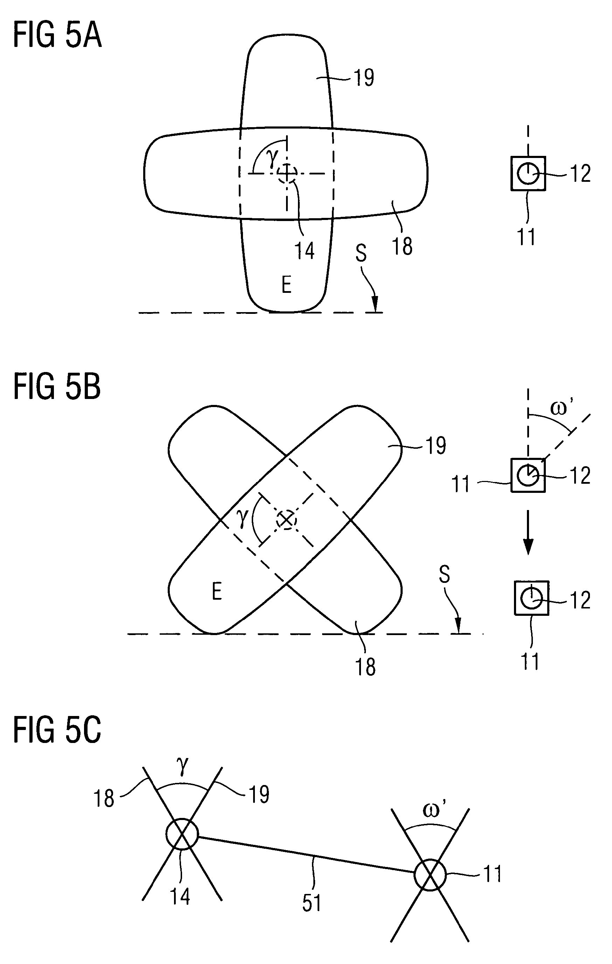

The movable part 18 is adapted: i) in a first position, to provide a cover for the optical lens 12 or a filter in front of the optical lens 12; and ii) in a second position, to provide a support for the body part 19. The first position may correspond to the position where the movable part 18 is in a "closed" position, i.e. providing maximal cover for the end E of the portable electronic device 10. In the second position, the movable part 18 could provide a support for the portable electronic device 10 together with the body part 19. Some related aspects are discussed below with reference to Figures 5A and 5B.

The optional zoom mechanismus 13 of the optical lens 12 is not shown since such mechanisms are in general well known. The zoom mechanismus 13 may be electrically operated, then preferably controllable by a processing unit of the portable electronic device 10 which can be controlled by camera control means 18B.

The body part 19 has an elongated form having at least one end E. The optical axis of the optical lens 12 adapted to pass through the said end E, and it may be substantially perpendicular (i.e. normal) to the said end. The movable part 18 may be adapted to at least partially cover the said end E when the movable part 18 is in its first position

The movable part 18 may further be adapted to, in its first position, cover the flash 12B, but at least it covers the end of the optical lens 12 or a filter positioned on top of the outermost lens.

The portable electronic device 10 may further comprise a display 18A and camera control means 18B, especially a trigger 17. The display 18A can be used for showing an image that the image detecting means 13B receive or a stored image read from a local or remote data storage.

Figure 2 shows another portable electronic device 20. The portable electronic device 20 is very similar to the portable electronic device 10 of Figure 1, the main difference is that the movable part 18 is joined by a hinge 14B to the body part 19.

The support provided by the movable part 18 in its the second position raises a front side of the optical lens 12 to a higher position.

Another difference between the portable electronic device 20 and the portable electronic device 10 is that now the flash 12B is in the movable part 18. The flash 12B could be in the movable part 18 of the portable electronic device 10, if it were not required that the movable part 18 protects the flash 12B.

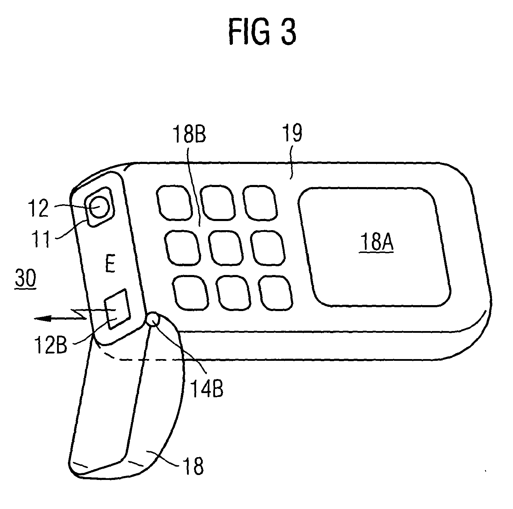

Figure 3 shows a third portable electronic device 30. The portable electronic device 30 is rather similar to portable electronic devices 10, 20 shown in Figures 1 and 2. Now the movable part 18 is removable from the body part 19. The movable part 18 may be of acrylic plastic or coloured silicon and be a cap-like member. Alternatively or in addition to this there may be a contact member, such as pivotable means or a hinge 14B, for joining the movable part 18 to the body part 19. The cap-like member is preferably tightly fitting so that it would perform its sealing function against dust or moisture in a satisfactory manner.

The movable part 18 is then suitable for being placed in two position: i) in a first position, to provide a cover for a optical lens 12 of the camera 11 or a filter in front of the optical lens 12; and ii) in a second position, to provide a support for a body part 19 of the portable electronic device 30.

Furthermore, the movable part 18 may comprise a flash 12B and a connection for providing operating power for the flash 12B from the portable electronic device 30. Alternatively or in addition to this, the movable part 18 may comprise a rechargeable battery. Then the movable part 18, a flash 12B in the movable part, or just the flash 12B in the movable part 18 preferably gets its operating power from the rechargeable battery. In the contact member there is preferably a contact pin for operating the flash 14B by short-circuiting.

In other words, it is possible that the flash 14B is in the main body 19 as shown in Figure 3 and the movable part 18 comprises a rechargeable battery for operating the flash 12B. In this manner power source (such as a rechargeable battery) of the portable electronic device 30 will not be excessively consumed by charging the condensators in a flash.

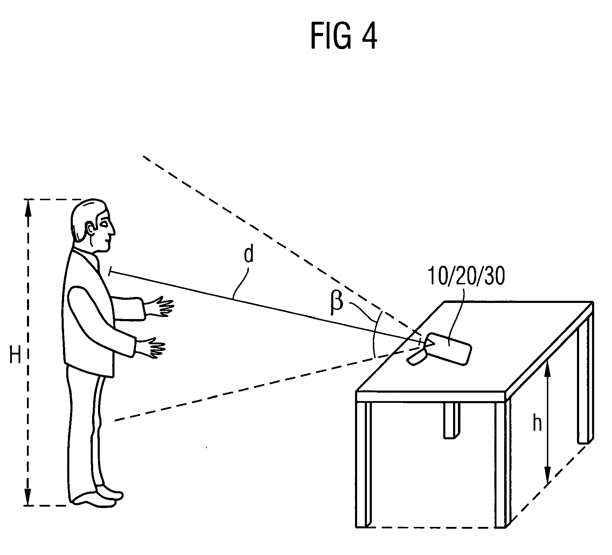

Figure 4 illustrates the portable electronic device 10, 20, or 30 placed on a table with height h for taking an image of a person having a height H with self timer. The elevation of the optical axis of the optical lens 12 is preferably so much that the when the person is at distance d ≈ 2 m, the view angle β of the optical lens 12 can be adapted to take at least a portrait of the person.

Figure 5A illustrates the portable electronic device 10 of Figure 1 wherein the movable part 18 has been rotated an angle γ from a first position to a second position. The movable part 18 does not yet provide support to the body part 19. In Figure 5B the portable electronic device 10 is released to use the support provided by the movable part 18. In Figure 5B, both the movable part 18 and the body part 19 support the portable electronic device 10 against a contact surface denoted with S in Figure 5A and 5B.

As shown on the right hand side, the optical axis of the optical lens 12 of the camera 11 is rotated with angle ω' when the portable electronic device 10 is set to rest on both movable part 18 and body part 19 in comparison to the direction of the optical axis that it had when the portable electronic device 10 was in position shown in Figure 5A. This would correspond rotating the image with the same angle ω'. According to one aspect of the invention, this effect may be automatically compensated. The manner in which the compensation is performed can vary, but a structurally simple solution is to make image detecting means of the camera 11 responsive to the movement of the movable part 18. Alternatively, the compensation may be performed using software in the portable electronic device 10.

Figure 5C illustrates one possibility for performing the automatic compensation. When the pivotable contact means 14 are rotated with an angle γ, this would cause a rotation of ω' in the optical axis. Therefore the image detection means of the camera 11 are rotated counterwise by angle -ω'. A simple mechanism 51 for mapping a rotation of γ of the pivotable contact means 14 to a rotation -ω' of the image detection means of the camera 11 that can be used may comprise a pair of suitable selected mesh gears or friction rolls. As an alternative, the mechanism 51 may be adapted to pass information on the angle γ by which the rotation has taken place, e.g. by using an Analog-to-Digital converter to pass the information to a processing unit of the portable electronic device 10 so that the rotation can be compensated by image handling software. Especially the latter approach applies to situations where the portable device electronic 10 is not always used as a standalone device but sometimes used in hand. Then the angle correction may be optional so that normally taken photographs (i.e. the portable electronic device 10 being in position shown in Figure 5A) will not be altered.

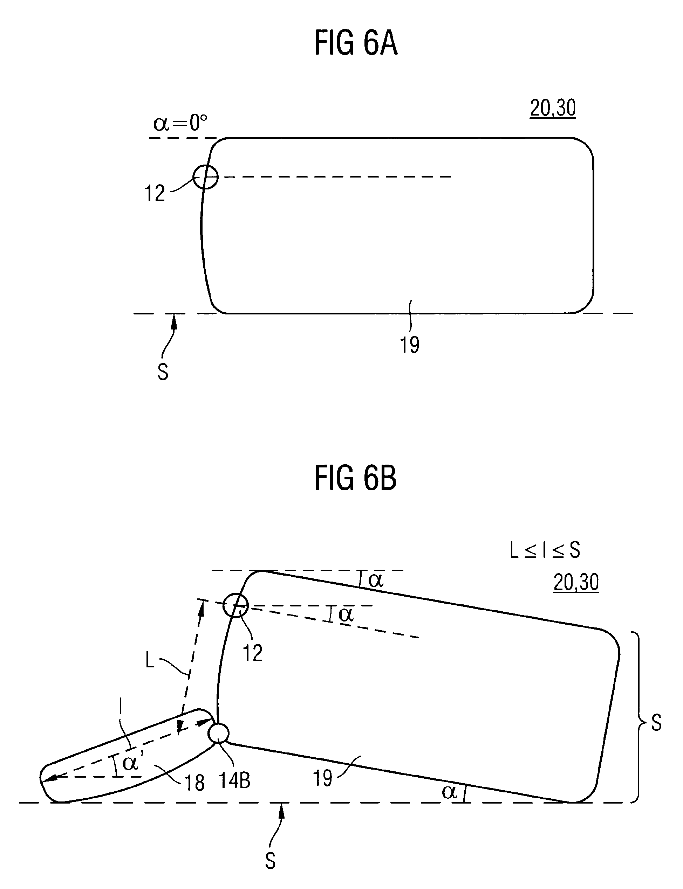

Figures 6A and 6B illustrate displacing the optical axis of the optical lens 12 by pitching the camera 11.

In Figure 6A, the body part 19 of a portable electronic device 20, 30 is laying on the support surface S. The angle α that the optical axis of the optical lens deviates from horizontal is zero.

In Figure 6B, the portable electronic device 20, 30 is supported partly by its body part 19, partly by the movable part 18, against a support surface S. The length *l* of the movable part 18 together with its angle α' from the support surface S defines the angle α by which the body part 19 is deviated from its original position. As a consequence of the body part turning with this angle α, the optical axis of the optical lens is pitched with same angle α. This may be at least partly compensated by adding a mechanism that is equivalent to mechanism 51, but now instead corrects the pitch of the optical lens 12 with - α in response to the angle α'. For this purpose, the camera 11 may have its optical lens 12 pivotably anchored at its rear end, so that the angle between the image detecting means at the end of the optical lens 12 and the optical lens 12 remains constant. The correction may be optional and controllable by the user as in the example shown in Figures 5A and 5B.

The skilled person appreciates that the invention may be carried out in many different ways in the spirit of the invention that can be understood by the scope of the accompanying patent claims.

## Claims

1. A portable electronic device (10; 20; 30), comprising:
- a body part (19) comprising a camera (11) further comprising an optical lens (12); and
- a movable part (18) adapted:
- i) in a first position, to provide a cover for the optical lens (12) or a filter in front of the optical lens (12); and
- ii) in a second position, to provide a support for the body part (19).

2. A portable electronic device (10; 20; 30) according to claim 1, wherein:
- the body part (19) has an elongated form having at least one end (E);
- the optical axis of the optical lens (12) is adapted to pass through the said end (E); and
- the movable part (18) in its first position is adapted to at least partially cover the said end (E).

3. A portable electronic device (10; 20; 30) according to claim 1 or 2, wherein: the support provided by the movable part (18) in its the second position raises a front side of the optical lens (12) to a higher position.

4. A portable electronic device (10) according to claim 1, 2, or 3, wherein: said movable part (18) is pivotable.

5. A portable electronic device (20; 30) according to claim 1, 2, or 3, wherein: said movable part (18) is joined by a hinge (14) to the body part (19).

6. A portable electronic device (20; 30) according to any one of the preceding claims, further comprising: a flash (12B) in the movable part (18).

7. A portable electronic device (10) according to any one of the preceding claims, further comprising: a flash (12B) in the body part (19), and wherein: said movable part (18) is adapted to, in its first position, to cover the flash (12B) .

8. A portable electronic device (10; 20; 30) according to any one of the preceding claims, wherein: said movable part (18) is removable from the body part (19).

9. A portable electronic device (10; 20; 30) according to any one of the preceding claims, wherein: said movable part (18) is of acrylic plastic or of coloured silicone.

10. A portable electronic device (10) according to any one of the preceding claims, wherein: said camera (11) or said optical lens (12) is responsive to the position of the movable part (18).

11. A movable part (18) for a portable electronic device (10; 20; 30) comprising a camera (11), **characterized in that**: said movable part (18) is suitable for being placed in two position: i) in a first position, to provide a cover for a optical lens (12) of the camera (11) or a filter in front of the optical lens (12); and ii) in a second position, to provide a support for a body part (19) of the portable electronic device (10; 20; 30).

12. A movable part (18) according to claim 12, further comprising: pivotable means (14B) or a hinge (14) for joining said movable part to the portable electronic device (10; 20; 30).

13. A movable part (18) of claim 11 or 12, further comprising: a flash (12B), an energy source for a flash (12B) integrated in the body part (19), or a flash (12B) and an energy source for the flash (12B).
